# EUROPÄISCHE PATENTSCHRIFT

(11) **EP 0 611 673 B1**
(45) Veröffentlichungstag und Bekanntmachung des Hinweises auf die Patenterteilung: **04.03.1998**
(21) Anmeldenummer: 94100872.4
(22) Anmeldetag: 21.01.1994
(51) Int. Cl.: B60J 7/185

(54) **Verschlussvorrichtung für Cabriolet-Verdecke**
Locking device for cabriolet-tops
Dispositif de fermeture pour capotes de cabriolet

(30) Priorität: 17.02.1993 DE 9302292 U
(43) Veröffentlichungstag der Anmeldung: 24.08.1994
(73) Patentinhaber: Wilhelm Karmann GmbH, D-49084 Osnabrück (DE)
(72) Erfinder: Schmitz, Hermann, D-49716 Meppen (DE)
(74) Vertreter: Busse & Busse Patentanwälte

(56) Entgegenhaltungen:
- EP-A- 0 492 006
- EP-A- 0 566 061
- WO-A-92/15466
- DE-A- 3 725 431

## Beschreibung

Die Erfindung bezieht sich auf eine Verschlußvorrichtung für Cabriolet-Verdecke in einer Ausbildung gemäß dem Oberbegriff des Anspruchs 1.

Bei dieser bekannten Verschlußvorrichtung ist die Steuerung des Zughakens jedoch nicht besonders präzise und in der Praxis muß im allgemeinen - bevor das Verdeck durch Betätigen des Bedienungshebels heruntergezogen und geschlossen wird - der Zughaken per Hand in das Gegenlager geschoben werden. Außerdem ist die Position des Hakens nach dem Öffnen des Verdecks nicht an der Dachspitze fixiert, sondern der Haken steht bei geöffnetem Verdeck senkrecht nach oben.

Aus der DE-A-37 25 431 ist eine Verschlußvorrichtung für Cabriolet-Verdecke bekannt, bei der der um eine feststehende Achse verschwenkbare Bedienungshebel über einen Lenkhebel, der mit dem Bedienungshebel über eine Achse beweglich gekoppelt ist, mit einer das Verschlußglied tragenden Schwenkachse unmittelbar verbunden ist. Die drei Achsen, von denen eine Achse feststehend und zwei Achsen lageveränderlich sind, definieren eine Art von Dreigelenk bzw. von "Kniehebel-Prinzip", jedoch keine Viergelenkkonstruktion. Es gibt bei dieser vorbekannten Vorrichtung auch keine ein Drehmoment auf das Verschlußglied ausübende Feder.

Es ist Aufgabe der Erfindung, eine Verschlußvorrichtung der eingangs genannten Art dahin zu modifizieren, daß eine präzise Steuerung des Verschlußhakens und damit ein komfortablerer Bedienungsablauf beim Verschließen des Verdecks ermöglicht und außerdem die Unfallsicherheit verbessert wird.

Zur Lösung dieser Aufgabe zeichnet sich die erfindungsgemäße Vorrichtung durch die im kennzeichnenden Teil des Anspruchs 1 angegebenen Merkmale aus. In den Ansprüchen 2 bis 5 sind vorteilhafte Ausgestaltungen der Erfindung angegeben.

Durch die erfindungsgemäße Kombination von Kulissenführung und Feder wird der Bewegungsablauf des Verschlußhakens eindeutig festgelegt und die Bewegungen von Handgriff und Verschlußhaken sind eindeutig aufeinander bezogen. Dadurch ist eine präzise Steuerung des Verschlußhakens gegeben. Insbesondere wird durch die Erfindung eine komfortablere Bedienung beim Verschließen und beim Öffnen des Verdecks ermöglicht. Der Verschlußhaken muß nicht mehr per Hand in das Gegenlager gedrückt werden, sondern eine alleinige,einhändige Betätigung des Handgriffs ist zum Verschließen und Öffnen des Verdecks ausreichend.

Aus der erfindungsgemäßen Ausgestaltung der Verschlußvorrichtung ergeben sich noch weitere Vorteile. So wird bei geschlossenem Verdeck der Haken durch die Feder von unten in ein Gegenlager gedrückt, so daß auch bei starkem Druck von außen auf die Dachspitze der Haken sich nicht lösen kann, was eine zusätzliche Sicherung gegen Diebstahl bedeutet. Außerdem ergibt sich eine Fixierung der Position des Verschlußhakens an der Dachspitze in der geöffneten Verdeckstellung. Wenn nämlich nach Öffnen des Verdecks der Handgriff in die Stellung parallel zum Lagerrahmen geschwenkt wird, so liegt der Verschlußhaken bei geöffnetem Verdeck an der Dachspitze an, wodurch die Unfallgefahr gemindert wird.

Ein Ausführungsbeispiel des Gegenstands der Erfindung wird nachstehend anhand einer schematischen Zeichnung näher erläutert. In der Zeichnung zeigen
- Fig. 1: eine Seitenansicht der Verschlußvorrichtung in einer das Cabrio-Verdeck bis fast in die Geschlossenstellung verbrachten Lage;
- Fig. 2: eine vergrößerte Ansicht des vorderen Bereichs der Verschlußvorrichtung mit Kulissenführung und Verschlußhaken;
- Fig. 3: eine Seitenansicht wie Fig. 1, jedoch nach dem Einfangen des Verschlußhakens in das Gegenlager;
- Fig. 4: eine Seitenansicht wie Fig. 1 u. 3 bei geschlossener Verschlußvorrichtung und geschlossenem Verdeck;
- Fig. 5: eine Seitenansicht der Verschlußvorrichtung bei ganz geöffnetem Verdeck.

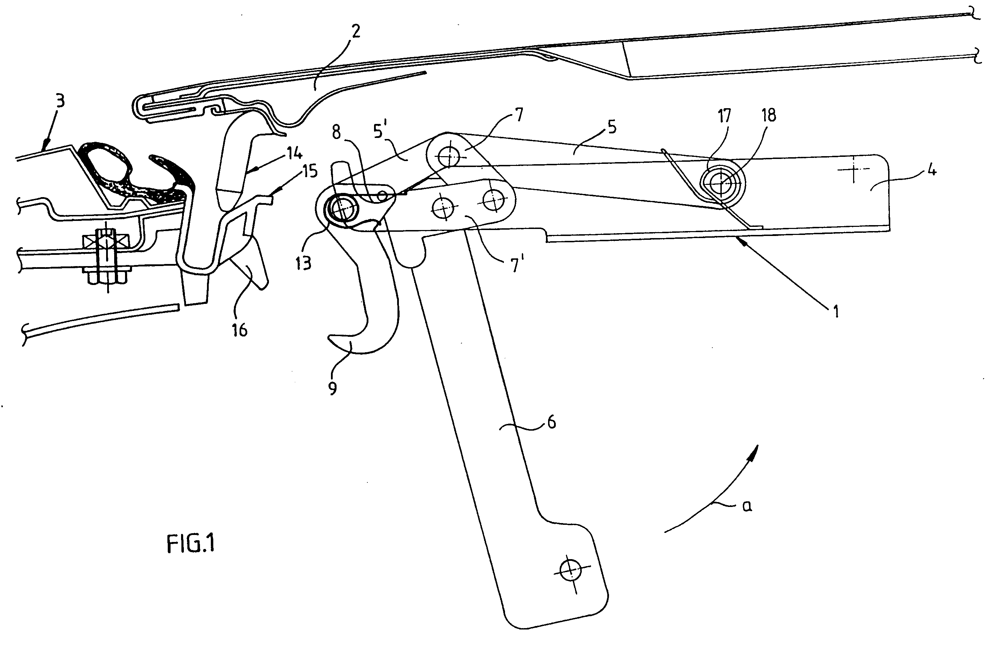

Die Fig. 1 zeigt in Seitenansicht die Verschlußvorrichtung 1, die Dachspitze 2 des Cabrio-Verdecks und den oberen Rahmen des Windschutzes 3.

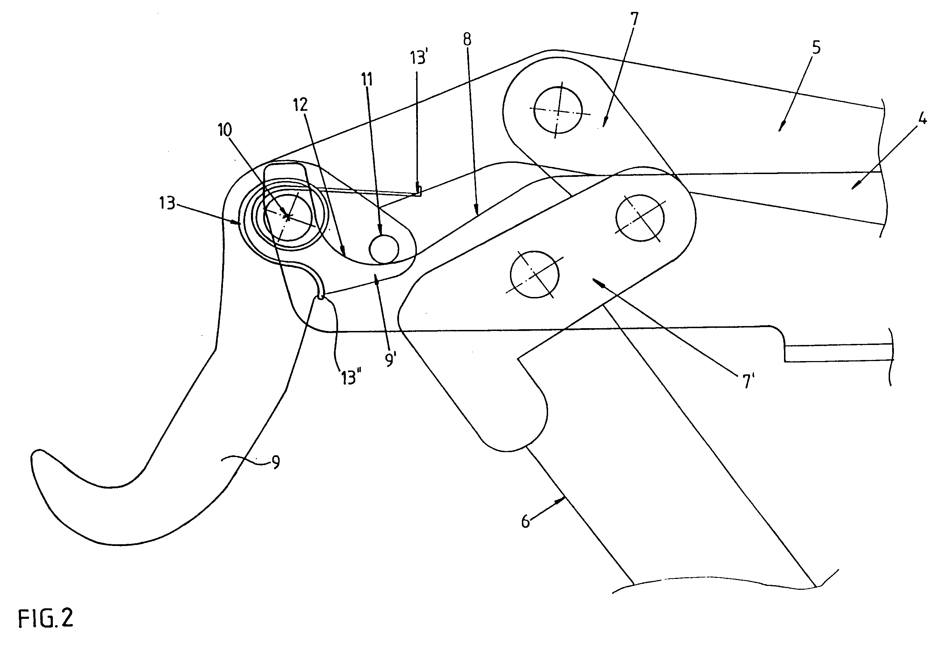

Die Verschlußvorrichtung 1 besteht aus einem Lagerrahmen 4, einem Hebel 5, 5', einem Handgriff 6, einer Gelenklasche 7, einer Kulissenführung 8 und einem Verschlußhaken 9. Aus Fig. 2 ist die Kulissenführung 8 für den Verschlußhaken 9 im Detail ersichtlich. Dargestellt ist das Ende des Hebels 5 mit dem um die Schwenkachse 10 gelagerten Verschlußhaken 9, der obere Teil des Handgriffs 6, die Gelenklasche 7 sowie der vordere Teil des Lagerrahmens 4. Der Verschlußhaken 9 weist an einem von der Schwenkachse 10 nach rückwärts weisenden Ansatz 9' einen Führungsbolzen 11 auf, der auf einer Führungskurve 12 der zweckmäßig am Lagerrahmen 4 ausgebildeten Kulissenführung 8 aufliegt. Eine Feder 13 greift bei 13' am Hebel 5' an, ist dann entsprechend der Zeichnung gegen den Uhrzeigersinn um die Schwenkachse 10 gewickelt und greift bei 13'' im oberen Bereich des Verschlußhakens 9 an. Die Feder 13 bewirkt ein Drehmoment im Uhrzeigersinn entprechend der Zeichnung auf den Haken 9, wodurch dieser in Schließrichtung vorgespannt und der Führungsbolzen 11 an die Führungskurve 12 der Kulissenführung 8 angedrückt wird.

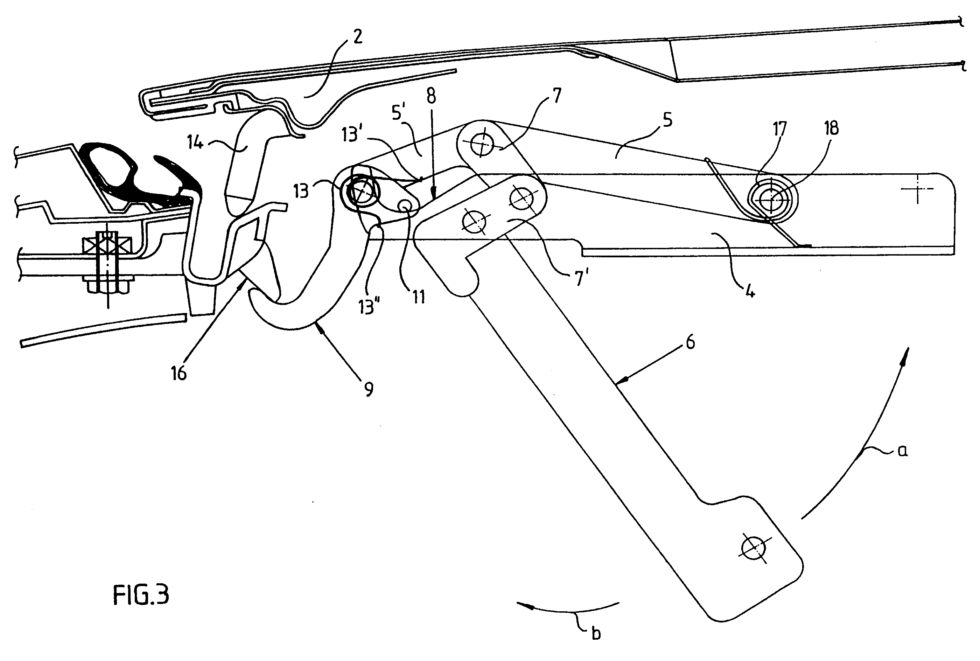

Wird - wie insbesondere aus Fig. 3 ersichtlich - der Handgriff 6 in Schließrichtung (Pfeil a) bewegt, so wird der Hebel 5, 5' durch das insgesamt von den Teilen 4, 5, 5', 6, 7, 7' ausgebildete Viergelenk angehoben. Durch die Bewegung des Hebels 5, 5' mit der Schwenkachse 10 und dem Verschlußhaken 9 sowie durch die Feder 13 und die Form der Führungskurve 12 wird auf den Führungsbolzen 11 ein Zwang in der Weise ausgeübt, daß der Verschlußhaken 9 eine Schwenkbewegung im Uhrzeigersinn entsprechend der Zeichnung ausführt. Wird der Handgriff 6 zum Öffnen betätigt (Pfeilrichtung b), so wird der Hebel 5, 5' abgesenkt und der Verschlußhaken 9 bewegt sich über den Führungsbolzen 11 entlang der Führungskurve 12 gegen den Uhrzeigersinn entsprechend der Zeichnung, d.h., er gelangt aus der Stellung gem. Fig. 3 wieder in die gem. Fig. 1. Dabei wird durch die Form der Führungskurve 12 und die Bewegung der Schwenkachse 10 am Hebel 5, 5' und des Verschlußhakens 9 ein Drehmoment auf den Führungsbolzen 11 ausgeübt, das gegen das Federdrehmoment wirkt.

In Fig. 1 ist die Position der Verschlußvorrichtung des Verdecks vor dem Schließvorgang dargestellt. Ein Zentrierzapfen 14 des Verdecks ist auf einen Einlauftrichter 15 gezogen worden. Der Verschlußhaken 9 steht in Fangstellung. Die Fig. 3 zeigt den weiteren Bewegungsablauf: Durch Schwenken des Handgriffs 6 um ca. 15° in Schließrichtung a wird der Verschlußhaken 9 in ein Gegenlager 16 eingehakt. Damit der Verschlußhaken 9 und der Handgriff 6 in dieser Position zum Einfangen des Hakens gehalten werden, ist eine Feder 17 in einem Lager 18 vorgesehen. Die Feder 17 übt auf den Hebel 5 eine Kraft in der Weise aus, daß der Hebel 5 nach unten gedrückt wird und somit beim Schwenken des Handgriffs 9 in Schließstellung eine Gegenkraft überwunden werden muß.

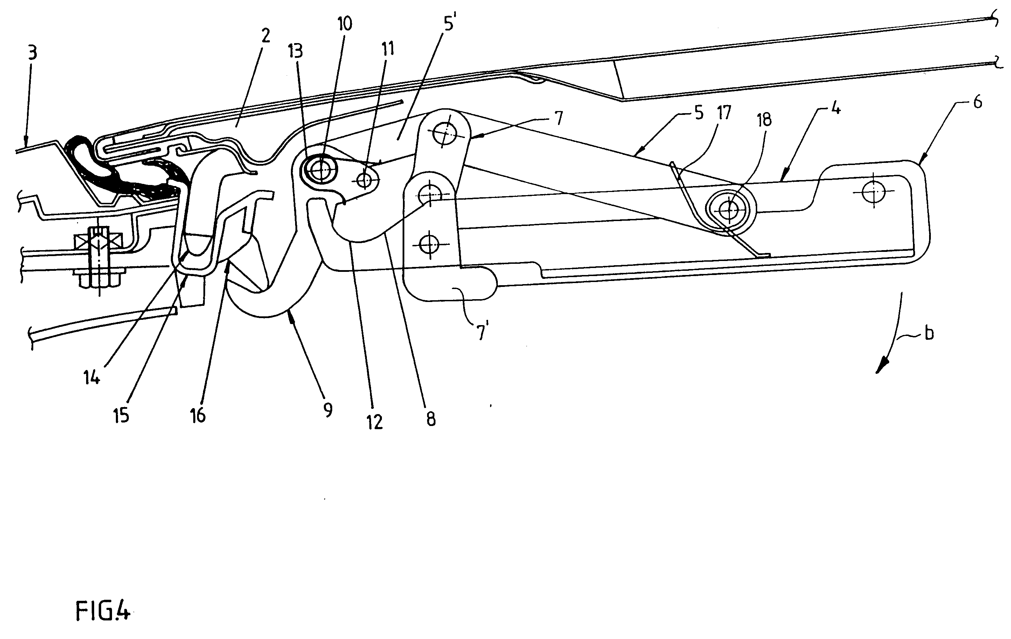

Die Position des Zentrierzapfens 14 ist während dieser Schwenkbewegung unverändert geblieben. Durch weiteres Schwenken des Handgriffs 6 in Schließrichtung a wird die Distanz zwischen Dachspitze 2 und Windschutz 3 verringert und der Zentrierzapfen 14 in den Einlauftrichter 15 gezwungen. Der Verschlußhaken 9 ist nun fest in das Gegenlager 16 eingehakt. Aufgrund der Festsetzung des Verschlußhakens 9 durch das Gegenlager 16 ist der Führungsbolzen 11 bei der weiteren Schwenkung des Handgriffs 6 aus der Führungskurve 12 der Kulissenführung 8 herausgelaufen, wie insbes. aus Fig. 4 ersichtlich. Der Verschlußhaken 9 ist über das Viergelenk und dessen Hebel 5, 5' mit dem Gegenlager verspannt und wird außerdem durch die Feder 13 gegen das Gegenlager 16 gedrückt. Somit kann sich der Verschlußhaken 9 auch bei Ausübung von Druck von außen auf die Dachspitze 2 nicht lösen.

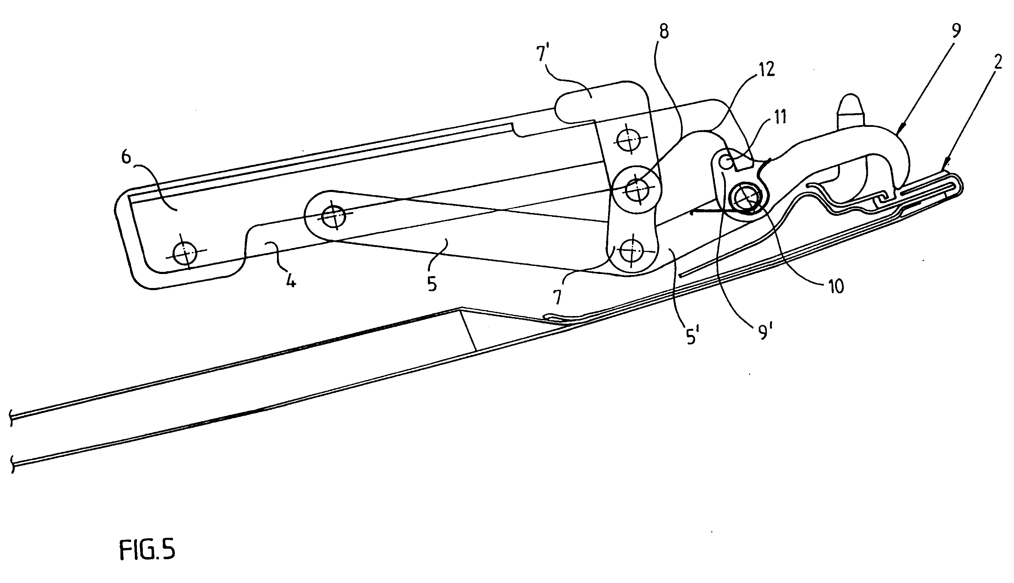

Fig. 5 zeigt die Position des Verschlußhakens 9 bei ganz geöffnetem Cabrio-Verdeck. Diese Position wird erreicht, wenn ausgehend von der Geschlossenstellung nach Fig. 4 der Handgriff 6 in Pfeilrichtung b verschwenkt und das Verdeck über die in Fig. 3 und Fig. 1 dargestellten Positionen nach rechts bewegt und in die Offenstellung umgeklappt worden ist. Wenn dann der Handgriff 6 wieder in die Schließstellung parallel zum Lagerrahmen 4 gebracht ist, liegt der Verschlußhaken 9 an der Dachspitze 2 an und bildet somit keine Gefahrenquelle mehr.

Der Gegenstand der Erfindung ist nicht auf das vorstehend anhand der Zeichnung beschriebene Ausführungsbeispiel begrenzt, vielmehr sind im Rahmen der Ansprüche Abwandlungen durchaus denkbar und möglich.

## Patentansprüche

1. Verschlußvorrichtung für Cabriolet-Verdecke, die eine Viergelenkkonstruktion mit einem an der Dachspitze (2) angebundenen Lagerrahmen (4), einem Handgriff (6), einer Gelenklasche (7, 7') und einem Hebel (5, 5'), an dessen verlängertem Ende ein um eine Achse (10) schwenkbarer Verschlußhaken (9) gelagert ist, aufweist, **dadurch gekennzeichnet**, daß zur Steuerung der Schwenkbewegung des Verschlußhakens (9) eine auf den Haken (9) ein Drehmoment in Schließrichtung ausübende Feder (13) und eine eine Führungskurve (12) ausbildende Kulissenführung (8) vorgesehen sind, derart, daß ein am Verschlußhaken (9) vorgesehener Führungsbolzen (11) unter der Kraft der Feder (13) an der Führungskurve (12) in Anlage gehalten wird.

2. Vorrichtung nach Anspruch 1, **dadurch gekennzeichnet**, daß die Führungskurve (12) der Kulissenführung (8) und die Feder (13) so aufeinander abgestimmt sind, daß der Verschlußhaken (9) bei Betätigung des Handgriffs (6) zum Verschließen des Verdecks eine seine Spitze nach vorne und oben in das Gegenlager (16) zwingende Bewegung erhält.

3. Vorrichtung nach Anspruch 1 oder 2, **dadurch gekennzeichnet**, daß die Führungskurve (12) der Kulissenführung (8) in ihrem von dem Führungsbolzen (11) durchlaufenen Bereich in etwa als Hyperbel ausgebildet ist.

4. Vorrichtung nach einem der Ansprüche 1 bis 3, **dadurch gekennzeichnet**, daß die Führungskurve (12) der Kulissenführung (8) im vorderen Teil des Lagerrahmens (4) ausgebildet ist.

5. Vorrichtung nach einem der Ansprüche 1 bis 4, **dadurch gekennzeichnet**, daß die Feder (13) auf der Drehachse (10) des Verschlußhakens (9) angeordnet ist und diesen in Schließrichtung vorspannt.

## Claims

1. A device for locking cabriolet tops, and comprising a four-bar structure with a mounting frame (4) connected to the roof apex (2), a handle (6), a hinge member (7, 7') ad a lever (5, 5') on the lengthened end of which there is a locking hook (9) adapted to pivot about a spindle (10), characterised in that for controlling the pivoting movement of the locking hook (9) there is on the hook (9) a spring (13) exerting torque in the direction of closure and a connecting link guide (8) providing a guide curve (12), so that a guide bolt (11) provided on the locking hook (9) is maintained bearing on the guide curve (12) by the force of the spring (13).

2. A device according to claim 1, characterised in that the guide curve (12) of the connecting link guide (8) and the spring (13) are so attuned to each other that when the handle (6)is actuated in order to close the cabriolet top, there is imparted to the locking hook (9) a movement which compels its tip to travel forwards and upwards into the end support (16).

3. A device according to claim 1 or 2, characterised in that the guide curve (12) of the connecting link guide (8) is formed substantially as a hyperbola in its portion through which the guide bolt (11) passes.

4. A device according to one of claims 1 to 3, characterised in that the guide curve (12) of the connecting link guide (8) is constructed in the front part of the mounting frame (4).

5. A device according to one of claims 1 to 4, characterised in that the spring (13) is disposed on the pivot axis (10) of the locking hook (9) and pretensions this latter in the direction of closure.

## Revendications

1. Dispositif de fermeture pour capotes de cabriolet, qui comprend une construction à quatre articulations avec un cadre d'appui (4) relié à la pointe du toit (2), une poignée (6), une attache articulée (7, 7') et un levier (5, 5'), à l'extrémité prolongée duquel est monté un crochet de fermeture (9) pouvant pivoter autour d'un axe (10),
caractérisé en ce que
pour la commande du mouvement de basculement du crochet de fermeture (9) sont prévus un ressort (13) exerçant un couple de rotation dans le sens de fermeture sur le crochet (9), et un guide à coulisse (8) réalisant une courbe de guidage (12), de manière qu'un tenon de guidage (11) prévu sur le crochet de fermeture (9) soit maintenu en position contre la courbe de guidage (12) sous l'effet de la force du ressort (13).

2. Dispositif selon la revendication 1,
caractérisée en ce que
la courbe de guidage (12) du guide à coulisse (8) et le ressort (13) sont accordés l'un à l'autre, de sorte que le crochet de fermeture (9) sous l'action de la poignée (6) pour fermer la capote obtient un mouvement imposant sa pointe vers l'avant et en haut dans la butée (16).

3. Dispositif selon les revendications 1 ou 2,
caractérisé en ce que
la courbe de guidage (12) du guide à coulisse (8) est réalisée dans sa zone parcourue par l'axe de guidage sensiblement comme une hyperbole.

4. Dispositif selon une des revendications 1 à 3,
caractérisé en ce que
la courbe de guidage (12) du guide à coulisse (8) est réalisé dans la partie antérieure du cadre d'appui (4).

5. Dispositif selon une des revendications 1 à 4,
caractérisé en ce que
le ressort (13) est moulé sur l'axe de rotation (10) du crochet de fermeture (9) et met en pré-tension celui-ci dans le sens de la fermeture.
